# EUROPEAN PATENT APPLICATION

(11) **EP 4 809 798 A1**
(43) Date of publication of application: **23.09.2026**
(21) Application number: 25164217.9
(22) Date of filing: 17.03.2025
(51) Int. Cl.: A01B 1/24, A01B 5/08, A01B 21/08

(54) **A SURFACE LEVELLING DEVICE**

(71) Applicant: Husqvarna AB, 561 82 Huskvarna (SE)
(72) Inventor: Neuburger, Sebastian, 89160 Dornstadt (DE); Reh, Bernhard, 89150 Laichingen (DE); Mock, Axel, 89134 Blaustein (DE)
(74) Representative: Finkele, Rolf

(57) **Abstract**

A surface levelling device (100) comprises a surface levelling frame (104), and a handle (101). The handle (101) is rotatably mounted to the surface levelling frame (104). The surface levelling device (100) is characterized in that the handle (101) is lockable relative to the surface levelling frame (104) at a pre-defined angular position.

## Description

### TECHNICAL FIELD

The present disclosure relates to a lawn care equipment for use in the maintenance and even distribution of soil, sand, or other materials on a lawn or garden surface. More particularly, the present disclosure relates to a surface levelling device that efficiently distributes material and achieves a uniform surface for turf growth, promoting better drainage, aesthetics, and overall lawn health.

### BACKGROUND

Over time, lawns often experience soil erosion or removal of soil, and it becomes necessary to add an appropriate amount of soil to maintain the lawn's vitality. Currently, the typical method is to first pour soil onto the areas of the lawn that need replenishment, then use a lawn levelling device, in particular a levelling rake to spread, level, and compact the soil. Existing levelling rakes are mostly in the form of large square flat plates, and during use, the rake must be pressed onto the soil pile and dragged back and forth to evenly distribute the soil. Therefore, today's levelling rakes are mostly solid and stable parts with a heavy weight. The stability, size and weight of the levelling rake are needed for evenly levelling the lawn. However, these result in large and heavy gardening tools which are bulky during transportation and storage. Furthermore, when the surface rake is not used for a shorter time period during surface levelling, the user has with today's surface rakes lay the handle on the ground and afterwards has to pick up the handle from the ground.

An example of an improved surface levelling device is provided by United States Patent Application US 2010/0088906 A1 (hereinafter referred to as '906 reference). The '906 reference discloses a rake designed for levelling surfaces covered with loose particulate matter, such as sand or soil. A rake head of the rake consists of multiple bars arranged in a specific pattern and spaced apart, with a handle fixedly attached via a movable fastener that adjusts the handle's angle relative to the rake head. The '906 reference discloses a handle which is freely rotatable relative to the rake head and has to be laid and picked up to/from the ground when the user takes a short break.

### SUMMARY OF THE INVENTION

In view of the above, it is an objective of the present invention to provide a surface levelling device which is at the same time robust, reliable to use as well as convenient to use. The objective is at least partially achieved by a surface levelling device according to the present invention.

According to an aspect of the present invention, the surface levelling device comprises a surface levelling frame and a handle. The handle is rotatably mounted to the surface levelling frame. The surface levelling device is characterized in that the handle is lockable relative to the surface levelling frame at a pre-defined angular position.

The present disclosure provides an improved surface levelling device with the feature of locking the handle in a substantially vertical position during non-use, allowing the surface levelling device to be parked securely and efficiently. This feature may eliminate the need for a user to bend down to grab the handle from the ground or surface each time they need to use the surface levelling device. Further, it enhances ergonomics by ensuring that the handle is always in an easily accessible position, thus reducing physical strain and promoting better posture, especially for a user with limited mobility or those working for extended periods.

Additionally, the rotational motion of the handle allows for easy adjustment to different angles, which is particularly useful for users of different body heights or for tasks that require different working angles. This adjustability ensures that the user may position the handle at a comfortable angle, whether the user is taller or shorter, preventing unnecessary bending or stretching. Further, it also allows for customization based on the specific task at hand, improving efficiency and reducing fatigue.

According to an exemplary embodiment of the invention, the surface levelling device may be a modular surface levelling device that may offer great flexibility, allowing the user to easily adjust or expand the surface levelling device to accommodate different lawn sizes, soil types, and specific levelling needs. Further, the modular parts of the surface levelling device may be designed to be compact and detachable, allowing for easy storage in environments with limited space. Each modular part may be disassembled, reducing the overall size of the surface levelling device and allows it to be stored in smaller spaces. Additionally, the user may not be required to replace the entire surface levelling device if a single part becomes damaged or worn out. Instead, they may simply remove and replace the specific part that needs attention.

According to an exemplary embodiment of the invention, the pre-defined angular position is between 80° and 110°, in particular substantially 90°, relative to a plane of the surface levelling frame. The locking of the handle in a substantially vertical orientation relative to the plane of the surface levelling frame may allow increased accessibility and may allow easy grabbing by the user. Thus, a physical strain may be reduced and ergonomics may be increased. This locked position may also prevent accidental movement of the handle, keeping it stable when the surface levelling device is not in use and contributing to overall safety. Additionally, the 90° pre-defined angular position provides a space-saving design, allowing the surface levelling device to be parked efficiently in compact spaces. Overall, locking the handle in the pre-defined angular range may improve accessibility, stability, safety, and usability, making the surface levelling device more efficient and user-friendly.

According to an exemplary embodiment of the invention, the surface levelling device further comprises a mounting part, wherein the handle is mounted to the mounting part. The mounting part is rotatably connected to the surface levelling frame such that the handle is rotatable relative to the surface levelling frame.

This rotational capability may substantially reduce user fatigue by enabling a more ergonomic and comfortable grip, as the handle connected to the mounting part may as well be rotated to suit the user's preferred position during operation. According to an exemplary embodiment of the invention, the rotatable mounting part may be configured to accommodate various surface levelling applications, comprising both horizontal and inclined levelling.

According to an exemplary embodiment of the invention, the mounting part comprises two opposite ends, wherein an interaction structure is formed on at least one of the two ends of the mounting part. Further, the surface levelling frame comprises at least one locking section, wherein the handle is lockable relative to the surface levelling frame by an interaction between the interaction structure of the mounting part with the locking section of the surface levelling frame. Locking the handle in a substantially vertical orientation may improve accessibility, reducing strain by allowing the user to grab it without bending. It may also keep the handle stable when not in use, enhancing safety. Additionally, the 90° lock design may save space, enabling efficient storage in compact areas.

In particular, the mounting part comprises two interaction structures, one on each of its two ends, and the surface levelling frame comprises two locking sections positioned such that the two locking sections engage with the two interaction structures. Furthermore, the engagement of the respective interaction structure with the respective locking section may at the same time form a rotational bearing allowing the mounting part to be rotatable relative to the surface levelling frame.

According to an exemplary embodiment of the invention, the handle is lockable relative to the surface levelling frame by an interaction between a protrusion and a recess, wherein the protrusion is formed on one of the interaction structure and the locking section, and wherein the recess is formed on another one of the interaction structure and the looking section.

The locking mechanism comprising the interaction between the protrusion and the recess may prevent unwanted movement of the handle during storage or non-use position of the handle. Further, it may enhance safety by keeping the handle stable when not in use while allowing for easy release and adjustment when needed, contributing to a durable and efficient design. At the same time, the interaction between the protrusion and the recess may provide a simple, reliable, and fail-safe locking mechanism.

According to an exemplary embodiment of the invention, the handle is lockable relative to the surface levelling frame at a pre-defined angular position by an interaction between a resilient pin with a dimple. In particular, the resilient pin is the protrusion, and the dimple is the recess.

The interaction between the resilient pin and the dimple may provide a precise, secure, and effortless way to maintain the handle's position when needed. The resilient pin, acting as the protrusion, may securely click into the dimple (the recess), ensuring the handle may remain locked when needed without the risk of inadvertently shifting. This design may not only offer a simple yet effective locking mechanism but may also allow for smooth, quick adjustments when releasing the resilient pin, making it user-friendly. Additionally, when the resilient pin interacts with the dimple, the user may get a tactile and acoustic feedback on the interaction.

According to an exemplary embodiment of the invention, the resilient pin may be made of a spring steel or similar material to provide sufficient elasticity for locking and unlocking the handle with minimal force. According to an exemplary embodiment of the invention, the resilient pin may comprise a tapered or rounded end to facilitate smoother engagement and disengagement with the dimple. According to an exemplary embodiment of the invention, the dimple may be reinforced with a durable material to minimize wear and tear, ensuring long-term functionality of the locking mechanism.

According to an exemplary embodiment of the invention, the resilient pin is formed on one of the interaction structure and the locking section, and the dimple is formed on another one of the interaction structure and the locking section. Thereby, a reliable and fail-safe locking mechanism may be provided. This setup may create a self-aligning, secure locking mechanism where the resilient pin may easily snap or plunge into the dimple, ensuring the handle stays fixed at a pre-defined position without requiring complicated components or excessive force. The design may maximize space efficiency and reduce the need for additional locking elements, making it cost-effective and easy to manufacture. Moreover, the resilient nature of the pin may allow for smooth and durable operation, accommodating slight misalignments and offering long-lasting performance even under harsh conditions. This interaction between the resilient pin and the dimple may not only lock the handle securely but may also enable effortless engagement and disengagement.

The resilient pin according to the present invention may denote a one-piece element which comprises a locking portion and a resilient portion, wherein the locking portion interacts with the dimple and the resilient portion ensures an axial movability. This may result in a cost-efficient and space-saving resilient pin. Alternatively, the resilient pin according to the present invention may denote a pin body and a spring element which are connected with each other. This may result in a resilient pin which is cost-efficient and easy to maintain.

According to an exemplary embodiment of the invention, a mounting sleeve is mounted into one of the mounting part and the surface levelling frame, and the mounting sleeve comprises the dimple.

The mounting sleeve may ensure a secure, stable connection between the components. The dimple formed within a front surface of the mounting sleeve may enhances the locking process by offering a durable, wear-resistant surface for the resilient pin to engage with. This design may allow to make the mounting sleeve from a different material than the mounting part or the surface levelling frame. Hence, the material may be adapted to reduce wear due to permanent contact with the resilient pin. Hence, costs may be reduced or optimized. According to an exemplary embodiment of the invention, the mounting sleeve may be removably mounted into one of the mounting part and the surface levelling frame.

According to an exemplary embodiment of the invention, the mounting sleeve may comprise two dimples, each designed to engage with a corresponding resilient pin of the two resilient pins. The two dimples may be positioned at diametrically opposite ends of the mounting sleeve to provide balanced support and improved stability for the handle. In particular, each of the two dimples may be tapered to guide the corresponding resilient pin into position. Hence, a smooth and precise engagement may be ensured.

According to an exemplary embodiment of the invention, the resilient pin is biased to engage with the dimple when the handle is in a storage position, and the resilient pin is disengaged from the dimple when the handle is in a working position. The storage position is the pre-defined angular position, and the working position is the position where the handle outside of the pre-defined angular position.

The handle being outside of the pre-defined angular position according to the present invention may denote that the handle may be, in particular freely, rotated for use.

This design may ensure that the handle may remain securely stowed away during storage, preventing accidental movement, and reducing the risk of damage or obstruction. At the same time, it may allow for easy and smooth transition to the working position, where the resilient pin may disengage automatically, enabling quick and effortless use.

According to an exemplary embodiment of the invention, the handle is lockable relative to the surface levelling frame at a pre-defined angular position by an interaction of a nose and two latching tabs. In particular, the nose is the protrusion, and the two latching tabs together form the recess.

The nose being the protrusion may engage with the two latching tabs that together form the recess, may ensure that the handle may be firmly held in place at the desired orientation, preferably substantially vertical orientation. This design may offer improved stability, preventing any unwanted movement or misalignment during storage of the handle. Additionally, the two latching tabs may allow for enhanced security by creating a more robust locking point.

According to an exemplary embodiment of the invention, the nose and two latching tabs may be made from a durable, wear-resistant material to ensure long-term reliability of the locking mechanism. According to an exemplary embodiment of the invention, the two latching tabs may be formed symmetrically, in particular substantially identical, to distribute the locking force evenly. According to an exemplary embodiment of the invention, the nose may be tapered to allow easier engagement with the two latching tabs, providing smoother operation during locking and unlocking.

According to an exemplary embodiment of the invention, the nose is formed on one of the interaction structure and the locking section, and the two latching tabs are formed adjacent to each other, and on another one of the interaction structure and the locking section. Thereby, stability and precision of the locking mechanism may be increased. This design may ensure a secure, tight engagement between the nose and latching tabs, providing a strong and reliable connection that holds the handle firmly at the desired orientation. The adjacent positioning of the latching tabs may offer better alignment, reducing the risk of mis-locking or unwanted handle movement. Further, this configuration may allow for smooth operation and effortless locking and unlocking, improving both safety and convenience.

According to an exemplary embodiment of the invention, a mounting sleeve is mounted into one of the mounting part and the surface levelling frame. The mounting sleeve comprises an inner ring area and an outer ring area surrounding the inner ring area, wherein the inner ring area forms an axial bearing, and the outer ring area supports the nose.

The mounting sleeve may enhance stability by securely supporting the nose, preventing misalignment, and ensuring smooth operation with reduced friction. This design may increase durability by minimizing wear on moving parts. This design may allow to make the mounting sleeve from a different material than the mounting part or the surface levelling frame. Hence, the material may be adapted to reduce wear due to permanent contact with the resilient pin. Hence, costs may be reduced or optimized. According to an exemplary embodiment of the invention, the mounting sleeve may be removably mounted into one of the mounting part and the surface levelling frame.

According to an exemplary embodiment of the invention, the nose is received between the two latching tabs when the handle is in a storage position, and the nose is disengaged from between the two latching tabs when the handle is in a working position. The storage position is the pre-defined angular position, and the working position is the position where the handle outside of the pre-defined angular position.

This design may ensure that the handle may stay safely stowed away during storage, preventing accidental movement, and minimizing obstruction or damage. When the handle is needed for use, the nose may smoothly disengage from the recess, allowing for easy and quick transition out of the pre-defined angular position and to the working position. This design may enhance both safety and convenience, ensuring the handle may remain stable during storage while being effortlessly accessible when in use.

According to an exemplary embodiment of the invention, during the transition between the storage position and the working position, the nose engages with the front surface of one of the two latching tabs in the intermediate position. In the intermediate position, the force applied to the handle may solely partly be transmitted to the surface leveling frame. This may ensure smoother, more controlled transition between positions, reducing wear and tear on the mounting part, the mounting sleeve, and the surface levelling frame.

According to an exemplary embodiment of the invention, the mounting part is a mounting bar extending between two opposite sides of the surface levelling frame. The mounting bar is configured to allow rotation of the handle relative to the surface levelling frame and is further configured to level the surface onto which the surface levelling frame is positioned.

The mounting part may provide increased stability and support for the handle while allowing smooth rotation relative to the surface levelling frame. This design may not only facilitate precise control and positioning of the handle but may also ensure that the surface leveling frame may be effectively level various surfaces. By integrating rotational functionality, levelling capability and at the same time the locking functionality into the mounting part, the surface levelling device may improve user ergonomics, operational ease, and overall efficiency. According to an exemplary embodiment of the invention, the mounting part may extend between two opposite sides of the surface levelling frame in a removable manner.

Before discussing the invention with the help of the drawings the invention will be briefly discussed in general. A surface levelling device comprises a surface levelling frame, and a handle. The handle is rotatably mounted to the surface levelling frame and configured to be locked relative to the surface levelling frame at a substantially vertical position. In other words, a user may bring the handle into a substantially vertical parking or storage position, such that the handle may remain in this position until the user uses and works with the surface levelling device again.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 illustrates a perspective view of a surface levelling device according to an exemplary embodiment of the present invention;
FIG. 2A illustrates a side view of a surface levelling device in a pre-defined angular position according to an exemplary embodiment of the present invention;
FIG. 2B illustrates a side view of a surface levelling device in a working position according to an exemplary embodiment of the present invention;
FIG. 3 illustrates a cross-sectional side view of a locking mechanism locking a handle in a pre-defined angular position according to a first exemplary embodiment of the present invention;
FIG. 4 illustrates a perspective view of a resilient pin according to the first exemplary embodiment of the present invention;
FIG. 5 illustrates a perspective view of a mounting sleeve according to the first exemplary embodiment of the present invention;
FIG. 6 illustrates a cross-sectional side view of a locking mechanism with a handle outside the pre-defined angular position according to the first exemplary embodiment of the present invention;
FIG. 7 illustrates a side view of a locking mechanism locking a handle in a pre-defined angular position according to a second exemplary embodiment of the present invention;
FIG. 8 illustrates a perspective view of a mounting sleeve according to the second exemplary embodiment of the present invention;
FIG. 9 illustrates a cross-sectional view of an interaction between a mounting sleeve of a mounting part and a locking section of a surface levelling frame according to the second exemplary embodiment of the present invention;
FIG. 10 illustrates a side view of a locking mechanism in an intermediate position according to the second exemplary embodiment of the present invention; and
FIG. 11 illustrates a side view of a locking mechanism with a handle outside of the pre-defined angular position according to the second exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

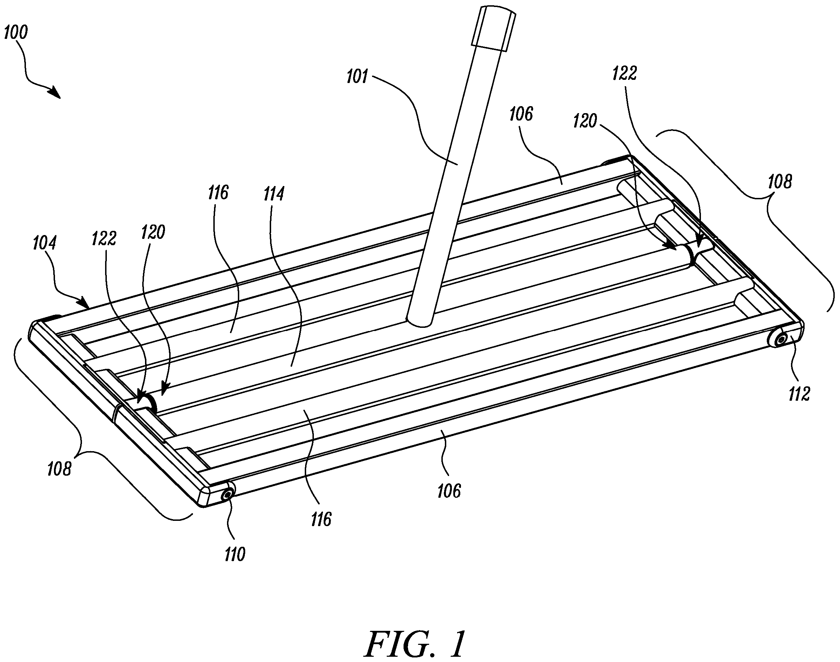

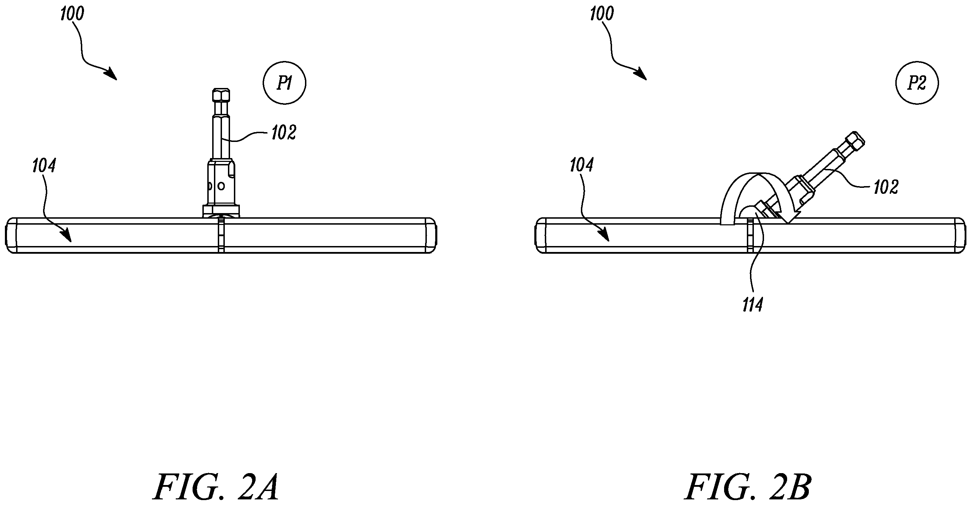

FIG. 1 illustrates a perspective view of a surface levelling device 100 according to an exemplary embodiment of the present invention. The surface levelling device 100 comprises a modular surface levelling frame 104 and a handle 101 removably coupled to the surface levelling frame 104 by a coupling part 102 (shown in FIG. 2A and FIG. 2B).

Further, the surface levelling frame 104 of the surface levelling device 100 has a modular structure. The surface levelling frame 104 comprises two longitudinal bars 106 having a substantially square cross-sectional geometry, and two side connections 108. The two longitudinal bars 106 and the two side connections 108 are removably connected to form the substantially rectangular surface levelling frame 104. One end of each of the two longitudinal bars 106 are connected to one of the two side connections 108 by a connection element 110. Additionally, another end of each of the two longitudinal bars 106 are connected to another of the two side connections 108 by a further connection element 112. The connection element 110 and the further connection element 112 are a threaded rod or a rod with a thread at one of its ends, which are fastened by a threaded sleeve screwed onto the connection element 110 respectively the further connection element 112.

Further, the surface levelling frame 104 comprises two intermediate bars 116, which have a substantially round cross-sectional geometry. Each of the two intermediate bars 116 is positioned in the plane with the surface levelling frame 104. Each of the two intermediate bars 116 is positioned between the two longitudinal bars 106, in particular adjacent to the corresponding longitudinal bars 106. One end of each of the two intermediate bars 116 are connected to one of the two side connections 108 by the connection element 110, and another end of the two intermediate bars 116 are connected to another of the two side connections 108 by the further connection element 112.

Further, the surface levelling frame 104 comprises a mounting part 114. The mounting part 114 is positioned in a plane with the surface levelling frame 104. The mounting part 114 is a mounting bar having a substantially round cross-sectional geometry, wherein the mounting bar 114 extends between the two opposite side connections 108. Further, the mounting part 114 is positioned between the two longitudinal bars 106 as well as between the two intermediate bars 116. In other words, the mounting part 114 is positioned in the middle of the two intermediate bars 116 which corresponds to a middle of the width of the surface levelling frame 104. The coupling part 102 is connected to the mounting part 114 and the handle 101 is mounted to the mounting part 114 via the coupling part 102.

Further, the mounting part 114 is rotatably connected to the surface levelling frame 104 such that the handle 101 is rotatable relative to the surface levelling frame 104. In other words, the mounting part 114 or the mounting bar is configured to allow rotation of the handle 101 relative to the surface levelling frame 104 and is further configured to level the surface onto which the surface levelling frame 104 is positioned. This rotatability is provided between an interaction structure 120 which is formed on each of the two ends of the mounting part 114 and a locking section 122 formed on each of the two side connections 108, wherein the interaction structure 120 and the locking section 122 engage each other and also comprise the locking mechanism.

FIG. 2A illustrates a side view of a surface levelling device 100 in a pre-defined angular position according to an exemplary embodiment of the present invention. In other words, FIG. 2A illustrates the coupling part 102 and hence the handle 101 (not illustrated in FIG. 2A) in a storage position P1 relative to the surface levelling frame 104. FIG. 2B illustrates a side view of a surface levelling device 100 in a working position P2 according to an exemplary embodiment of the present invention. In other words, FIG. 2B illustrates the coupling part 102 in a position outside of the pre-defined angular position. The storage position P1 and the working position P2 of the surface levelling device 100 are defined with respect to the position of the handle 101 relative to the surface levelling frame 104. Hence, the storage position P1 and the working position P2 of the surface levelling device 100 are interchangeably written as the storage position P1 and the working position P2 of the handle 101. The handle 101 is rotatably mounted to the surface levelling frame 104 via the coupling part 102 and configured to be rotated between the pre-defined angular position and other angular positions outside of the pre-defined angular position. The storage position P1 is the pre-defined angular position. Further, the working position P2 is the position where the handle 101 is outside of the pre-defined angular position.

Further, the handle 101 is lockable relative to the surface levelling frame 104 at the pre-defined angular position. The pre-defined angular position is between 80° and 110°. In the exemplary embodiment as illustrated in FIG. 2A, the pre-defined angular position is substantially 90° relative to a plane of the surface levelling frame 104. In other words, the handle 101 is lockable in the storage position P1 and has an orientation of substantially 90° relative to the plane of the surface levelling frame 104 in the storage position P1. In use, as is also illustrated in FIG. 2B, the plane of the surface levelling frame 104 corresponds to the ground to be levelled.

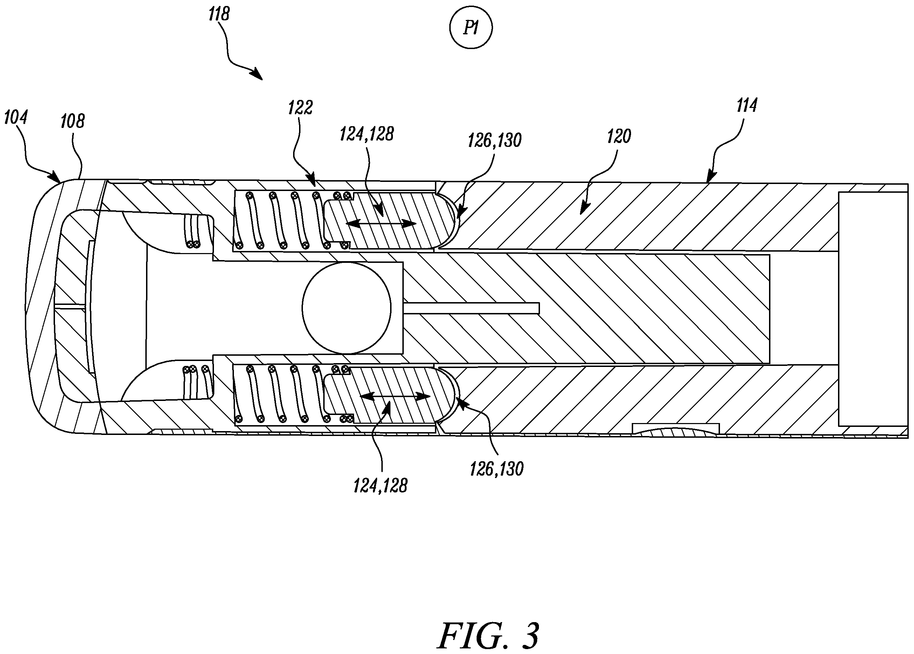

FIG. 3 illustrates a cross-sectional side view of a locking mechanism locking a handle 101 respectively the coupling part 102 in a pre-defined angular position according to a first exemplary embodiment of the present invention. The mounting part 114 to which the handle 101 is connected via the coupling part 102 comprises two opposite ends removably connected to the two side connections 108 of the surface levelling frame 104, respectively. An interaction structure 120 is formed on each of the two ends of the mounting part 114. The respective interaction structure 120 is removably mounted to each of the ends of the mounting part 114. Further, the surface levelling frame 104 comprises two locking sections 122 corresponding to each of the two interaction structures 120. The two locking sections 122 are formed within the two side connections 108 of the surface levelling frame 104 by removably mounting them thereto. The coupling structure 102 and thereby the handle 101 is lockable relative to the surface levelling frame 104 by an interaction between the interaction structures 120 of the mounting part 114 with the corresponding locking sections 122 of the surface levelling frame 104. However, FIG. 3 only illustrates interaction between the interaction structure 120 formed or mounted within one of the two ends of the mounting part 114 with the corresponding locking section 122 of the surface levelling frame 104, as interaction at both ends of the mounting part 114 are implemented in a similar manner.

With continuous reference to FIG. 3, the handle 101 is lockable relative to the surface levelling frame 104 by an interaction between a protrusion 124and a corresponding recess 126. The protrusions 124 are formed on the surface levelling frame 104, in particular on the side connection 108, and the recesses 126 are formed on the mounting part 114. As illustrated in FIG. 3, the protrusions 124 are formed or provided with the locking section 122 further formed or removably mounted within the side connection 108 of the surface levelling frame 104, and the recesses 126 are formed or provided with the interaction structure 120 further formed or removably mounted within the end of the mounting part 114.

Further, as illustrated in FIG. 3, the protrusion 124 is a resilient pin 128 and the recess 126 is a dimple 130. In other words, the handle 101 is lockable relative to the surface levelling frame 104 at a pre-defined angular position by an interaction between the resilient pin 128 with the corresponding dimple 130. The resilient pin 128 is mounted on the side connection 108 of the surface levelling frame 104. Additionally, the dimple 130 is formed on the mounting part 114.

Further, the resilient pin 128 is biased or preloaded to engage with the corresponding dimple 139 when the handle 101 is in the storage position P1 respectively in the pre-defined angular position as illustrated in FIG. 3. Therefore, in the storage position P1, the resilient pin 128 aligns with and snaps into the corresponding dimple 139, securely locking the handle 101 in the storage position P1 upon full engagement.

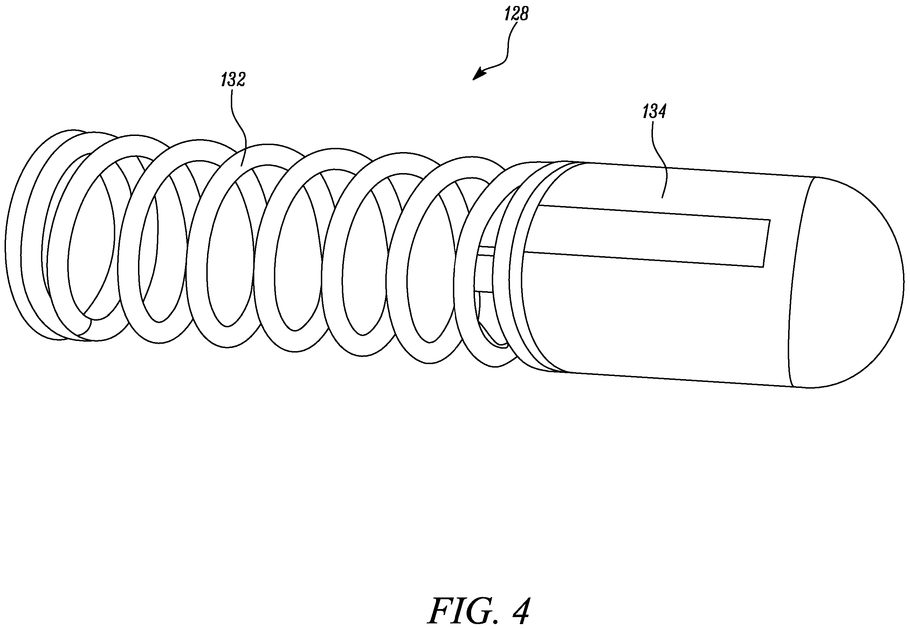

FIG. 4 illustrates a perspective view of a resilient pin according to the first exemplary embodiment of the present invention. The resilient pin 128 comprises a compression spring 132 with a peg 134 connected at one end. The compression spring 132 is preloaded to provide bias, while the peg 134 is designed to move axially within the spring's compression range. The peg 134 has a shape optimized to plunge into a circular or hemispherical dimple 130. Its geometry is such that when the handle 101 is rotated into the pre-defined angular position respectively the storage position P1, the resilient pin 128 actuates upon alignment with the corresponding dimple 139, such that the peg 134 securely engages into the dimple 130.

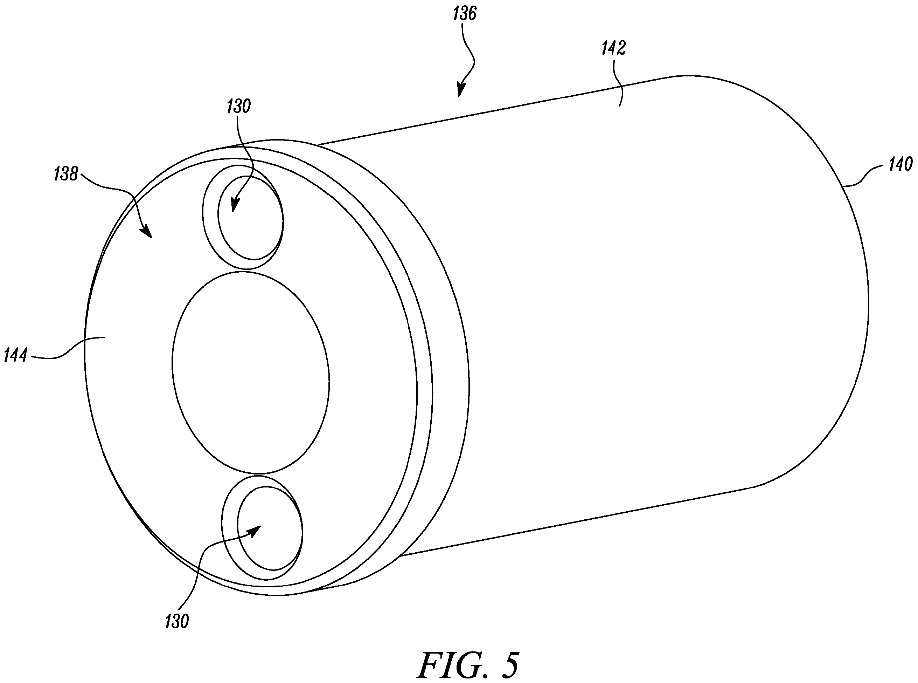

FIG. 5 illustrates a perspective view of a mounting sleeve according to the first exemplary embodiment of the present invention. The mounting sleeve 136 is configured to be mounted into one of the mounting part 114 and the surface levelling frame 104. The mounting sleeve 136 forms the interaction structure 120 mounted onto each of the two ends of the mounting part 114.

The mounting sleeve 136 has a cylindrical elongated body have a front surface 138, a back surface 140, and a side wall 142 extending between the front surface 138 and the back surface 140. The front surface 138 comprises two diametrically spaced apart dimples 130, separated by a flat surface 144 in between. The front surface 138 comprises two dimples 130 corresponding to two resilient pins 128 actuate upon alignment with the corresponding dimples 139, wherein the pegs 134 of the respective resilient pins 128 fit securely into the corresponding dimples 130. In other words, the mounting sleeve 136 comprises the dimples 130 for interaction with the corresponding resilient pins 128 in the storage position P1. The dimples 130 are formed substantially identical and are shaped circular or hemispherical.

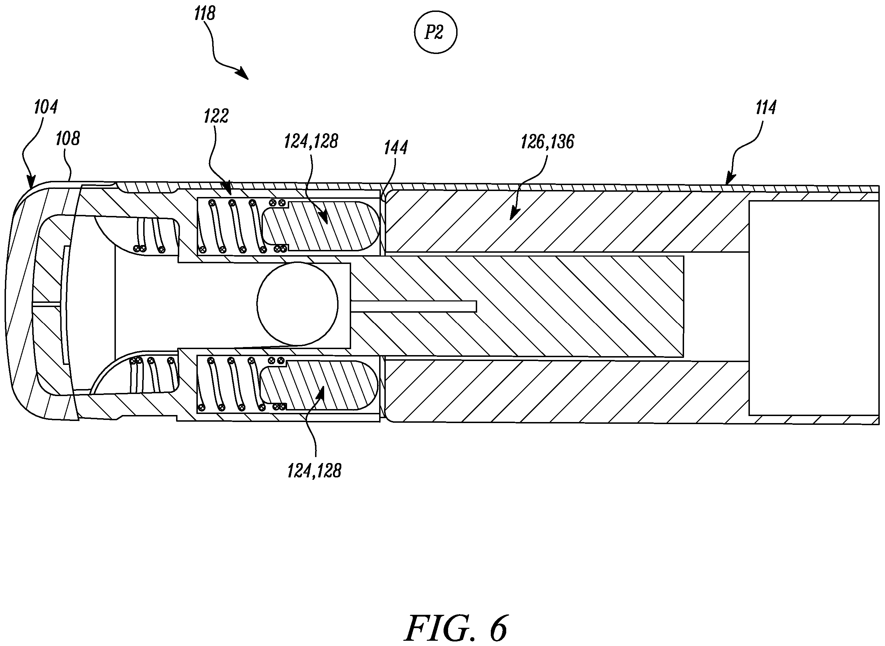

FIG. 6 illustrates a cross-sectional side view of a locking mechanism with a handle 101 respectively a coupling part 102 outside the pre-defined angular position according to the first exemplary embodiment of the present invention. When the handle 101 is rotated outside of the pre-defined angular position, the handle 101 is in other words in the working position P2. In the working position P2, the resilient pins 128 are disengaged from the dimples 130 and the resilient pins 128 further slide over the flat surface 144 of the mounting sleeve 136 in a substantially circular path until further rotation of the handle 101 is stopped.

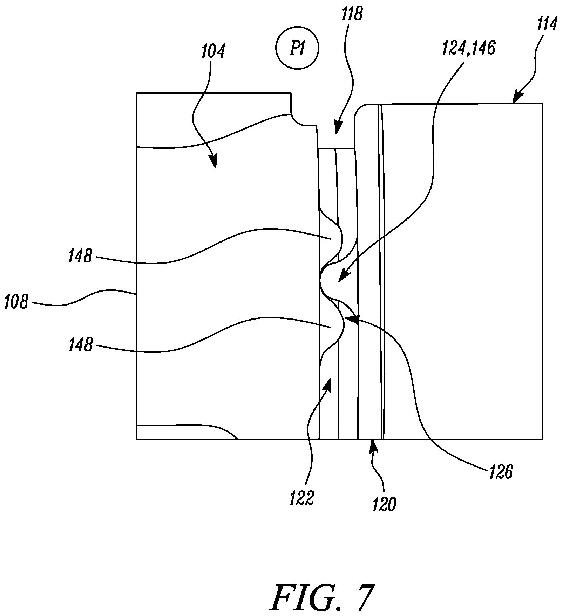

FIG. 7 illustrates a side view of a locking mechanism locking a handle 101 in a pre-defined angular position according to a second exemplary embodiment of the present invention. The mounting part 114 to which the handle 101 is connected via the coupling part 102 comprises two opposite ends connected to the two opposite side connections of the surface levelling frame 104, respectively. An interaction structure 120 is formed on or mounted to each of the two ends of the mounting part 114. Further, the surface levelling frame 104 comprises two locking sections 122 each corresponding to one of the two interaction structures 120. The two locking sections 122 are formed on or mounted to the two side connections 108 of the surface levelling frame 104, wherein the handle 101 is lockable relative to the surface levelling frame 104 by an interaction between the interaction structures 120 of the mounting part 114 with the corresponding locking sections 122 of the surface levelling frame 104. However, FIG. 7 only illustrates interaction between the interaction structure 120 formed or mounted within one of the two ends of the mounting part 114 with the corresponding locking section 122 of the surface levelling frame 104, an interaction at both ends of the mounting part 114 are implemented in a similar manner.

With continuous reference to FIG. 7, the handle 101 respectively the coupling part 102 is lockable relative to the surface levelling frame 104 by an interaction between a protrusion 124 and a corresponding recess 126. The protrusion 124 is formed on the mounting part 114. Further, the recess 126 is formed on the side connection 108 of the surface levelling frame 104. In particular, as illustrated in FIG. 7, the protrusion 124 is formed or provided with the interaction structure 120 further formed or removably mounted within the end of the mounting part 114, and the recess 126 is formed or provided with the locking section 122 further formed or removably mounted within the side connection 108 of the surface levelling frame 104.

Further, as illustrated in FIG. 7, the protrusion 124 is a nose 146 and the recess 126 is formed by two latching tabs 148. In other words, the handle 101 is lockable relative to the surface levelling frame 104 at a pre-defined angular position by an interaction of the nose 146 and two latching tabs 148. Further, the nose 146 is formed on the mounting part 114 and the two latching tabs 148 are formed adjacent to each other on the mounting part 114.

Further, the nose 146 is received and held between the two latching tabs 148 when the handle 101 is in the storage position P1. Therefore, as the handle 101 is rotated from the working position P2 to the storage position P1, the nose 146 aligns with and snaps into a substantially V-shaped recess 126, which is formed by two inverted V-shaped latching tabs 148. This ensures the handle 101 is securely locked in the storage position P1 upon full engagement.

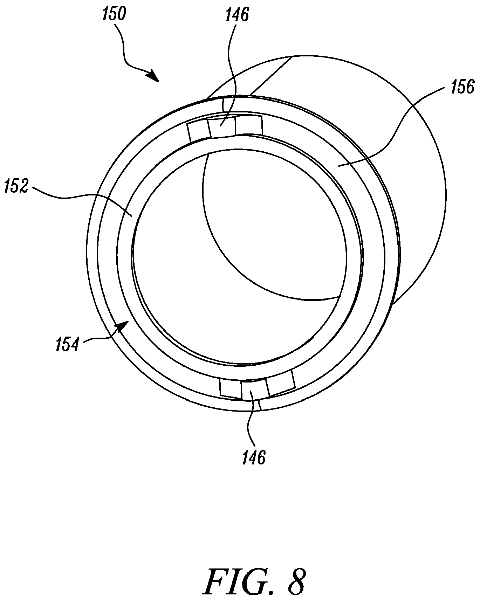

FIG. 8 illustrates a perspective view of a mounting sleeve according to the second exemplary embodiment of the present invention. The mounting sleeve 150 is configured to be mounted into one of the mounting part 114 and the surface levelling frame 104. The mounting sleeve 150 as illustrated in FIG. 8 is at least partially mounted into the mounting part 114 (as illustrated in FIG. 7). The mounting sleeve 150 is the interaction structure 120 formed on both ends of the mounting part 114.

The mounting sleeve 150 comprises an inner ring area 152 and an outer ring area 154 at least partially surrounding the inner ring area 152. The inner ring area 152 has a cylindrical elongated body and forms an axial bearing. Furthermore, the outer ring area 154 is configured to support two noses 146 as illustrated in FIG. 8, which are diametrically spaced apart and separated by a flat surface 156 in between. When the handle 101 is rotated from the working position P2 to the storage position P1, the nose 146 aligns with and snaps between the two latching tabs 148. In other words, the mounting sleeve 150 comprises the nose 146which interacts with the corresponding recess 126 formed by and between two latching tabs 148, in the storage position P1.

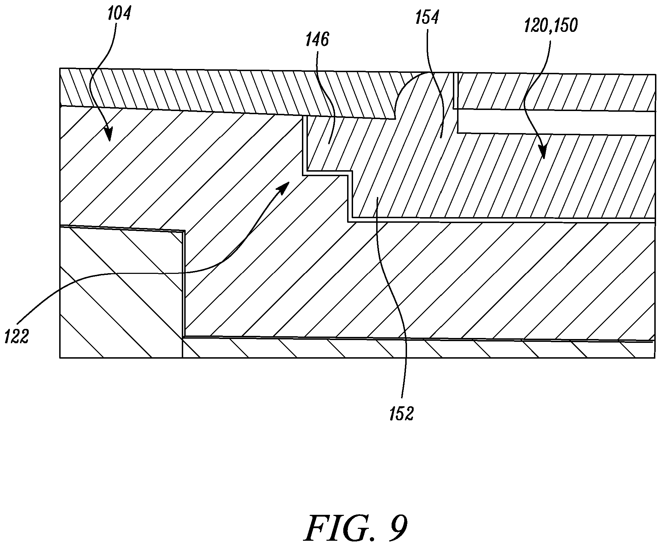

FIG. 9 illustrates a cross-sectional view of an interaction between a mounting sleeve 150 (also referred to as the interaction structure 120) of a mounting part 114 and a locking section 122 of a side connection 108 of a surface levelling frame 104 according to the second exemplary embodiment of the present invention. In the storage position P1, the axial bearing is rotatably engaged with the surface levelling frame 104, wherein the force applied to the handle 101 is transmissible to the surface levelling frame 104. Further, the nose 146 on the outer ring area 154 aligns with and snaps between two latching tabs 148.

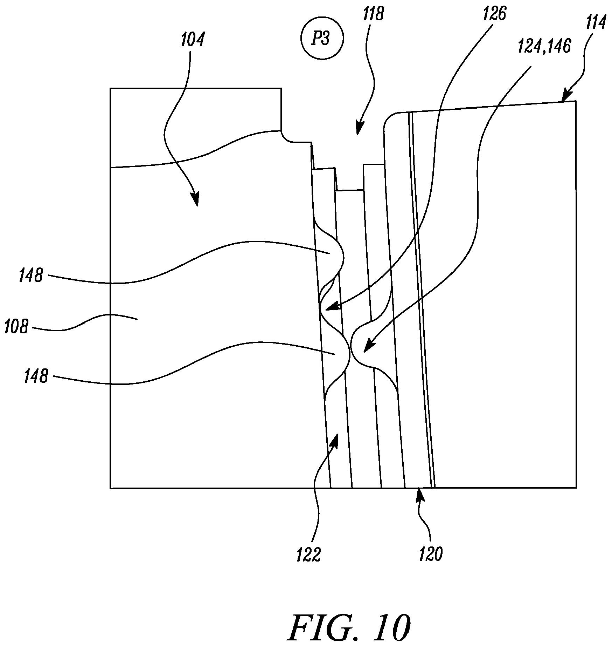

FIG. 10 illustrates a side view of a locking mechanism in an intermediate position P3 according to the second exemplary embodiment of the present invention. During the transition between the storage position P1 and the working position P2, the nose 146 engages with the front surface of one of the two latching tabs 148 in the intermediate position P3. The intermediate position P3 is the position in-between the pre-defined angular position denoted as storage position P1 and all other positions which are outside of the pre-defined angular position denoted as the working position(s) P2.

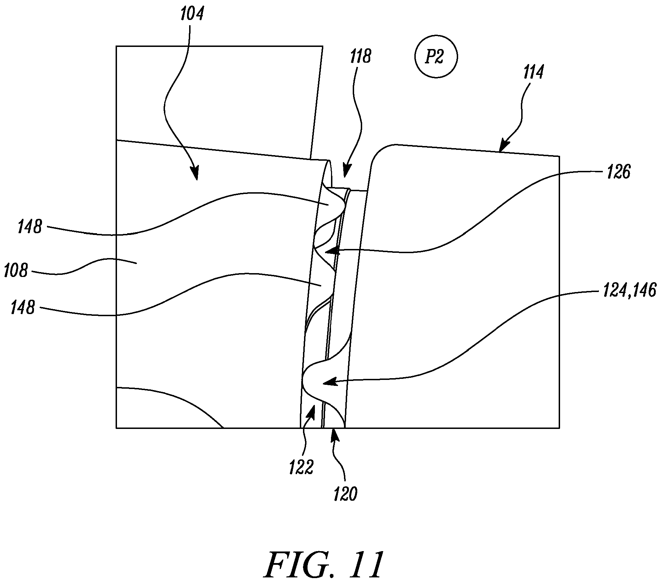

FIG. 11 illustrates a side view of a locking mechanism with a handle 101 outside of the pre-defined angular position according to the second exemplary embodiment of the present invention. The nose 146 is disengaged from between the two latching tabs 148 when the handle 101 is rotated outside the pre-defined angular position respectively into the working position P2. Further, the force applied to the handle 101 is transmissible to the surface levelling frame 104 in the working position P2.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Surface Levelling Device
- 101: handle
- **102**: Coupling Part
- **104**: Surface Levelling Frame
- **106**: Longitudinal Bar
- **108**: Side Connection
- **110**: Connection Element
- **112**: Further Connection Element
- **114**: Mounting Part
- **116**: Intermediate Bar
- **118**: Locking Mechanism
- **120**: Interaction Structure
- **122**: Locking Section
- **124**: Protrusion
- **126**: Recess
- **128**: Resilient Pin
- **130**: Dimple
- **132**: Compression Spring
- **134**: Peg
- **136**: Mounting Sleeve
- **138**: front Surface
- **140**: Back Surface
- **142**: Side Wall
- **144**: Flat Surface
- **146**: Nose
- **148**: Latching Tab
- **150**: Mounting Sleeve
- **152**: Inner Ring area
- **154**: Outer Ring area
- **156**: Flat Surface
- P1: Storage Position
- P2: Working Position
- **P3**: Intermediate Position

## Claims

1. A surface levelling device (100) comprising
a surface levelling frame (104), and
a handle (101),
wherein the handle (101) is rotatably mounted to the surface levelling frame (104),
**characterized in that**:
the handle (101) is lockable relative to the surface levelling frame (104) at a pre-defined angular position.

2. The surface levelling device (100) according to claim 1,
wherein the pre-defined angular position is between 80° and 110°, in particular substantially 90°, relative to a plane of the surface levelling frame (104).

3. The surface levelling device (100) according to claim 1 or claim 2, further comprising:
a mounting part (114),
wherein the handle (101) is mounted to the mounting part (114),
wherein the mounting part (114) is rotatably connected to the surface levelling frame (104) such that the handle (101) is rotatable relative to the surface levelling frame (104).

4. The surface levelling device (100) according to claim 3,
wherein the mounting part (114) comprises two opposite ends,
wherein an interaction structure (120) is formed on at least one of the two ends of the mounting part (114),
wherein the surface levelling frame (104) comprises at least one locking section (122),
wherein the handle (101) is lockable relative to the surface levelling frame (104) by an interaction between the interaction structure (120) of the mounting part (114) with the locking section (122) of the surface levelling frame (104).

5. The surface levelling device (100) according to claim 4,
wherein the handle (101) is lockable relative to the surface levelling frame (104) by an interaction between a protrusion (124) and a recess (126),
wherein the protrusion (124) is formed on one of the interaction structure (120) and the locking section (122), and
wherein the recess (126) is formed on another one of the interaction structure (120) and the locking section (122).

6. The surface levelling device (100) according to any one of the claims 1 to 5, wherein the handle (101) is lockable relative to the surface levelling frame (104) at a pre-defined angular position by an interaction between a resilient pin (128) with a dimple (130),
in particular wherein the resilient pin (128) is the protrusion (124) and the dimple (130) is the recess (126).

7. The surface levelling device (100) according to claim 6,
wherein the resilient pin (128) is formed on one of the interaction structure (120) and the locking section (122), and
wherein the dimple (130) is formed on another one of the interaction structure (120) and the locking section (122).

8. The surface levelling device (100) according to any of the claim 6 or claim 7, wherein a mounting sleeve (136) is mounted into one of the mounting part (114) and the surface levelling frame (104), and
wherein the mounting sleeve (136) comprises the dimple (130).

9. The surface levelling device (100) according to any one of the claims 6 to 8, wherein the resilient pin (128) is biased to engage with the dimple (130) when the handle (101) is in a storage position (P1), and the resilient pin (128) is disengaged from the dimple (130) when the handle (101) is in a working position (P2), wherein the storage position (P1) is the pre-defined angular position,
wherein the working position (P2) is the position where the handle (101) is outside of the pre-defined angular position.

10. The surface levelling device (100) according to any one of the claims 1 to 5, wherein the handle (101) is lockable relative to the surface levelling frame (104) at a pre-defined angular position by an interaction of a nose (146) and two latching tabs (148),
in particular wherein the nose (146) is the protrusion (124) and the two latching tabs (148) together form the recess (126).

11. The surface levelling device (100) according to claim 10,
wherein the nose (146) is formed on one of the interaction structure (120) and the locking section (122), and
wherein the two latching tabs (148) are formed adjacent to each other, and wherein the two latching tabs (148) are formed on another one of the interaction structure (120) and the locking section (122).

12. The surface levelling device (100) according to any of the claim 10 or claim 11,
wherein a mounting sleeve (150) is mounted into one of the mounting part (114) and the surface levelling frame (104), and
wherein the mounting sleeve (150) comprises an inner ring area (152) and an outer ring area (154) surrounding the inner ring area (152),
wherein the inner ring area (152) forms an axial bearing, and
in particular wherein the outer ring area (154) supports the nose (146).

13. The surface levelling device (100) according to any one of the claims 10 to 12,
wherein the nose (146) is received between the two latching tabs (148) when the handle (101) is in a storage position (P1), and the nose (146) is disengaged from between the two latching tabs (148) when the handle (101) is in a working position (P2),
wherein the storage position (P1) is the pre-defined angular position,
wherein the working position (P2) is the position where the handle (101) is outside of the pre-defined angular position.

14. The surface levelling device (100) according to any one of the preceding claims,
wherein the mounting part (114) is a mounting bar extending between two opposite sides of the surface levelling frame (104),
wherein the mounting bar is configured to allow rotation of the handle (101) relative to the surface levelling frame (104) and is further configured to level the surface onto which the surface levelling frame (104) is positioned.
